# FASCICULE DE BREVET EUROPEEN

(11) **EP 1 826 155 B1**
(45) Date de publication et mention de la délivrance du brevet: **29.07.2009**
(21) Numéro de dépôt: 07300821.1
(22) Date de dépôt: 23.02.2007
(51) Int. Cl.: B65G 27/02, B65G 47/14

(54) **Dispositif de distribution contrôlée d'objets introduits en vrac dans un bol vibrant, système correspondant**
Vorrichtung zur gesteuerten Verteilung von Gegenständen, die lose in einen Rüttler gegeben werden, entsprechendes System
Device for controlled distribution of objects inserted in bulk in a vibrating bowl, corresponding system

(30) Priorité: 24.02.2006 FR 0650658
(43) Date de publication de la demande: 29.08.2007
(73) Titulaire: Les Applications de la Vibration, 91230 Montgeron (FR)
(72) Inventeur: Marault, Jean Michel, 94240 L'Hay Les Roses (FR); Damois, Sylvain, 78770, Thoiry (FR)
(74) Mandataire: Michelet, Alain

(56) Documents cités:
- DE-U1- 20 208 685
- US-A- 3 275 120

## Description

La présente invention concerne un dispositif de distribution contrôlée d'objets par bol vibrant, les objets étant introduits en vrac dans le dispositif. Elle a des applications dans le domaine de l'emballage et plus particulièrement dans les chaînes automatisées de mise en flacons de produits à appliquer (type mascara, vernis à ongles ou autres) ou à pulvériser (type parfum, eau de toilette ou autres), que ce soit des cosmétiques, parfums, médicaments ou autres. Un système mettant en oeuvre le dispositif complète l'invention.

On connaît déjà des dispositifs de distribution d'objets mettant en oeuvre un bol vibrant qui comporte des moyens permettant d'orienter correctement des objets au cours de la progression de ceux-ci le long d'un parcours dans ledit bol vibrant, vers une sortie dudit bol. Pour cela on utilise l'asymétrie des objets, que ce soit la forme et/ou le centre de gravité, afin qu'une orientation déterminée de l'objet soit plus stable que d'autres lors du parcours. Dans le cadre de l'invention, ces objets sont notamment des moyens de pulvérisation ou des applicateurs destinés à être placés sur un flaconnage.

Divers types de parcours ont été proposés comme par exemple les rampes hélicoïdales ou les rampes coniques spiralées. Parmi les rampes hélicoïdales on peut signaler le document US-3275120 qui montre la mise en oeuvre d'une gouttière en V s'étendant en périphérie d'un bol vibrant sur plus de 360° et dans laquelle les objets sont alignés longitudinalement le long de leur direction de progression. Si le parcours en lui-même permet une certaine ségrégation entre les objets en fonction de leur orientation lors de leur progression, ceci n'est généralement pas suffisant et il est nécessaire de disposer le long du parcours d'un moyen de sélection qui permet de n'envoyer à la sortie que les objets dont l'orientation est correcte, les autres étant éliminés du parcours.

Toutefois, du fait de la forme circulaire ou hélicoïdale du parcours, le moyen de sélection pour être correctement intégré au bol vibrant doit présenter une forme correspondante, sauf à être disposé en dehors du bol. Il en résulte des difficultés de réalisation et cela rend plus difficile l'adaptation du bol vibrant à un autre type d'objet, de taille et/ou de forme différentes, que celui pour lequel le bol a été initialement conçu.

D'autre part, il existe des difficultés de mise en place et d'interchangeabilité des moyens de sélection du fait de leur forme.

La présente solution qui propose notamment de résoudre les problèmes précédents, consiste à mettre en oeuvre un moyen de sélection rectiligne sur une rampe conique circulaire interne d'un bol vibrant, le moyen de sélection étant disposé juste en amont de la sortie du bol vibrant et formant donc la dernière partie, dans le sens de progression des objets, de la rampe conique.

Ainsi, l'invention concerne un dispositif de distribution contrôlée d'objets ordonnés par bol vibrant, les objets étant introduits en vrac dans le bol vibrant et sortant selon une orientation déterminée et constante par une sortie latérale du bol vibrant, le bol vibrant sensiblement circulaire ayant intérieurement une rampe conique périphérique dont la partie la plus élevée est à la sortie du bol vibrant, un moyen mécanique de sélection pour éliminer de la rampe les objets n'ayant pas l'orientation déterminée étant disposé dans une section de la rampe, les objets étant des pièces allongées dont le centre de gravité est décentré dans la longueur avec une tête se poursuivant par une queue, la tête ayant une forme sensiblement cylindrique et comportant un dessus de tête opposé à un dessous de collerette, le dessous de collerette se poursuivant par la queue, la rampe comportant un guide permettant de maintenir la tête de l'objet lors de sa progression sur la rampe.

Selon l'invention, le moyen de sélection est disposé à la sortie dans le bol vibrant et est une zone rectiligne de la rampe de direction sensiblement parallèle à une tangente à la périphérie dudit bol vibrant, la rampe s'étendant en longueur sur moins de 360°.

Dans divers modes de mise en oeuvre de l'invention, les moyens suivants pouvant être utilisés seuls ou selon toutes les combinaisons techniquement possibles, sont employés :
- les objets en vrac sont introduits vers le centre du bol sur son fond,
- le diamètre général de la tête est supérieur au diamètre du reste de l'objet,
- le centre de gravité de l'objet se trouve au niveau de la tête,
- la tête comporte au moins une encoche circulaire,
- les objets sont des applicateurs de mascara ou de vernis à ongles,
- les objets sont des applicateurs, la tête est un bouchon et la queue un pinceau à mascara ou à vernis à ongles,
- les objets sont des moyens de pulvérisation,
- les objets sont des moyens de pulvérisation, la tête est équipée ou non d'un poussoir et la queue est une tigelle, ledit moyen de pulvérisation pouvant comporter une pompe,
- les objets sont des pompes-échantillons,
- la rampe conique circulaire (moyen de sélection compris) s'étend sur une longueur inférieure à 360°,
- la rampe conique circulaire (moyen de sélection compris) s'étend sur une longueur d'environ 270°,
- le moyen de sélection comporte une première partie sensiblement plane et fixe, ladite première partie comportant le guide, et une seconde partie en L sous la première partie et de position réglable en translation, selon un axe intérieur-extérieur (entre l'intérieur du bol et l'extérieur du bol), par rapport à la première partie, la barre du L orientée vers le haut formant vers l'extérieur une glissière contre laquelle le dessus de la tête de l'objet ou une encoche circulaire sur le pourtour de la tête de l'objet peut prendre appui et glisser lors du déplacement de l'objet guidé par le guide,
- le dispositif comporte des moyens pour que les objets n'ayant pas l'orientation déterminée et qui sont éliminés de la rampe soient recyclés en tombant sur le fond du bol vibrant,
- la première partie sensiblement plane et fixe du moyen de sélection est dans le prolongement et dans le plan de la partie adjacente (et qui est vers le centre du bol) de la rampe conique et la seconde partie en L est de position réglable en translation, selon un axe intérieur-extérieur (entre l'intérieur du bol et l'extérieur du bol), par rapport à la première partie(donc le long d'un axe intérieur-extérieur sensiblement radial du bol),
- la seconde partie du moyen de sélection comporte une ouverture bordant au moins une partie de la barre du L orientée vers le haut et destinée à permettre le passage et le recyclage par chute d'un objet n'ayant pas l'orientation déterminée,
- le bol comporte une zone élargie en périphérie (vers l'extérieur du bol) au moins au niveau de la section de la rampe comportant le moyen de sélection afin que les objets n'ayant pas l'orientation déterminée et ayant pu basculer vers l'extérieur de la rampe, au-delà de la barre du L orientée vers le haut, tombent sur le fond du bol et puissent être recyclés dans le dispositif,
- la barre du L orientée vers le haut comporte, à son extrémité opposée à la sortie, une première portion avec une rampe d'éjection permettant de faire basculer et tomber hors de la rampe un objet n'ayant pas l'orientation déterminée et dont une partie chevauche ladite rampe d'éjection lors de sa progression,
- la rampe d'éjection est une portion découpée (ou tout autre moyen de créer ladite rampe : meulage...) de la barre du L orientée vers le haut,
- la rampe d'éjection est une pièce rapportée sur la barre du L orientée vers le haut,
- le guide est au moins une rainure en creux s'étendant sensiblement circulairement le long de la rampe conique,
- le guide est au moins un épaulement s'étendant sensiblement circulairement le long de la rampe conique,
- le guide est au moins un épaulement et au moins une rainure en creux s'étendant sensiblement circulairement le long de la rampe conique,
- le guide est la contre-empreinte de la forme extérieure de la tête de l'objet s'étendant sensiblement circulairement le long de la rampe conique,
- le guide est au moins une rainure en creux,
- le guide est une rainure en creux s'étendant sensiblement circulairement le long de la rampe conique, une partie évasée de la tête de l'objet pouvant entrer et circuler dans ladite rainure ce qui permet le maintien de la tête de l'objet lors de sa progression sur la rampe,
- le guide est au moins un épaulement,
- le guide est au moins un épaulement, le dessous de collerette de la tête pouvant s'appuyer et glisser sur ledit épaulement lors de la progression de l'objet sur la rampe,
- la tête comporte une encoche circulaire et le guide est un épaulement s'étendant sensiblement circulairement le long de la rampe conique, l'encoche circulaire de la tête pouvant s'engager sur ledit épaulement ce qui permet le maintien de la tête de l'objet lors de sa progression sur la rampe,
- le guide est un épaulement s'étendant sensiblement circulairement le long de la rampe conique, le dessous de collerette de la tête pouvant s'appuyer et glisser sur ledit épaulement ce qui permet le maintien de la tête de l'objet lors de sa progression sur la rampe, la barre du L orientée vers le haut et ledit épaulement réalisent une forme générale en U à l'intérieur de laquelle est maintenue et circule la tête (dans le moyen de sélection donc),
- le fond de la forme générale en U à l'intérieur de laquelle est maintenue et circule la tête dans le moyen de sélection est en retrait (voir aussi/ou ouvert dans le cas où la seconde partie du moyen de sélection comporte une ouverture bordant au moins une partie de la barre du L orientée vers le haut) par rapport au plan général de la première partie sensiblement plane et fixe du moyen de sélection,
- le fond de la forme générale en U à l'intérieur de laquelle est maintenue et circule la tête dans le moyen de sélection est en retrait (voir aussi/ou ouvert dans le cas où la seconde partie du moyen de sélection comporte une ouverture bordant au moins une partie de la barre du L orientée vers le haut) par rapport au plan général de la première partie sensiblement plane et fixe du moyen de sélection et une rampe de redressement de la tête est disposée dans ledit fond du U vers la sortie,
- la première partie sensiblement plane et fixe du moyen de sélection est adaptée pour recevoir d'une manière interchangeable au moins deux types de seconde partie de moyen de sélection, le premier type comportant l'ouverture bordant au moins une partie de la barre du L orientée vers le haut et le second type n'en comportant pas,
- le bol vibrant comporte au moins une trappe de vidange destinée à vider du bol vibrant les objets en vrac,
- la trappe de vidange est à glissière (guillotine),
- la trappe de vidange est articulée par une charnière,
- la trappe est amovible et verrouillable (on peut l'ouvrir pour vidange ou la fermer, elle peut être verrouillée en fermeture),
- la trappe est disposée sur le fond du bol vibrant,
- la trappe est disposée sur une partie de la paroi périphérique circulaire du bol vibrant,
- la trappe est disposée sur une partie de la paroi périphérique circulaire du bol vibrant, entre la sortie de la rampe et le début de la rampe,
- le dispositif comporte au moins un capteur destiné à détecter la présence ou l'absence d'objet dans le fond du bol vibrant,
- le capteur destiné à détecter la présence ou l'absence d'objet dans le fond du bol vibrant commande un moyen de délivrance à la demande d'objets en vrac,
- le dispositif comporte au moins deux rampes au moins partiellement superposées,
- les sorties des rampes débouchent dans un même plan vertical,
- les sorties des rampes ne débouchent pas dans un même plan vertical,
- le dispositif comporte au moins deux rampes au moins partiellement superposées, les sorties des rampes débouchant dans un même plan vertical,
- les débuts des rampes (zone de rampe la plus basse, sur le fond du bol) sont angulairement décalés,
- les rampes sont radialement décalées, les sorties des rampes étant décalées dans un même plan vertical,
- les rampes sont superposées, les sorties des rampes étant superposées dans un même plan vertical,
- les guides sont radialement décalés, les sorties des rampes étant décalées dans un même plan vertical,
- les guides sont superposés, les sorties des rampes étant superposées dans un même plan vertical.

L'invention concerne également un système de présentation régulière d'objets par bol vibrant, les objets étant introduits en vrac dans le bol vibrant et sortant orientés, à une sortie du système.

Le système de présentation comporte, d'une part, le dispositif de distribution selon l'une ou plusieurs des caractéristiques précédemment listées et, d'autre part, un dispositif tampon disposé en aval de la sortie dudit dispositif de distribution, le dispositif tampon comportant une partie interchangeable de redressement d'objets et une partie tampon interchangeable de stockage et convoyage puis de présentation à la sortie des objets.

Des variantes du système de présentation peuvent également comporter une ou plusieurs des caractéristiques suivantes :
- la partie interchangeable de redressement d'objets est une glissière en U (ou H) ouverte dans son fond pour passage de la queue de l'objet, la tête de l'objet reposant par son dessous de collerette sur ledit fond de la glissière et étant maintenue latéralement lors du redressement par au moins un des deux bords du U de la glissière,
- la partie interchangeable de redressement d'objets est une glissière en U (ou H) ouverte dans son fond pour passage de la queue de l'objet, ladite glissière en U étant sensiblement la contre-empreinte de la forme extérieure de la tête de l'objet,
- la glissière en U est en métal,
- la glissière en U est dans une matière plastique,
- la matière plastique de la glissière en U est moulée,
- la matière plastique de la glissière en U est usinée,
- la partie interchangeable de redressement d'objets amène à la verticale, tête vers le haut, les objets depuis une orientation déterminée inclinée à la sortie du bol vibrant,
- la partie tampon est droite.

L'invention permet la réalisation d'un dispositif à bol vibrant compact, de forme régulière, en pratique circulaire (à l'exception d'une portion externe débordant en regard du moyen de sélection pour le recyclage des objets) et donc plus simple à réaliser. La quantité de matière mise en oeuvre est réduite et la forme du bol vibrant est plus régulière, ce qui facilite la mise en mouvement vibratoire du bol.

De plus, il est plus simple de mettre en oeuvre des moyens d'adaptation à des objets différents (notamment tiroir réglable pour maintenir l'objet entre le guide de la première partie et la barre du L orientée vers le haut de la seconde partie du moyen de sélection) dans une portion rectiligne que dans une portion courbe (dans ce dernier cas, la courbure doit varier avec le rayon pour garder un écart constant entre le guide et la barre du L orientée vers le haut de la seconde partie du moyen de sélection). De ce fait, l'adaptation peut se faire sur le site/chaîne d'utilisation du dispositif sans avoir à faire de relevés dimensionnels du bol, sans avoir à retourner le bol chez le fabriquant ou sans avoir à démonter le bol vibrant.

Enfin, de par son efficacité, le dispositif de l'invention permet de se passer de la (des) soufflette à air comprimé généralement disposée au niveau du moyen de sélection et destinée à faciliter l'élimination d'objets n'ayant pas l'orientation déterminée. Il en résulte des coûts de fabrication, d'adaptation et de maintenance réduits.

La présente invention va maintenant être exemplifiée sans pour autant en être limitée avec la description qui suit en relation avec les figures suivantes:
la Figure 1 qui représente le système de l'invention en vue perspective plongeante,
la Figure 2 qui représente le dispositif de l'invention vu de dessus,
la Figure 3 qui représente le dispositif de l'invention vu latéralement, face à la sortie S,
la Figure 4 qui représente une coupe A-A de la Figure 2,
la Figure 5 qui représente une coupe B-B de la Figure 2,
la Figure 6 qui représente une vue perspective du dispositif de l'invention,
les Figures 7 et 8 qui représentent deux exemples de seconde partie en L du moyen de sélection, et
les Figures 9 et 10 qui représentent respectivement en coupe AA et en vue de dessus, une variante de réalisation du dispositif de l'invention à deux rampes superposées décalées.

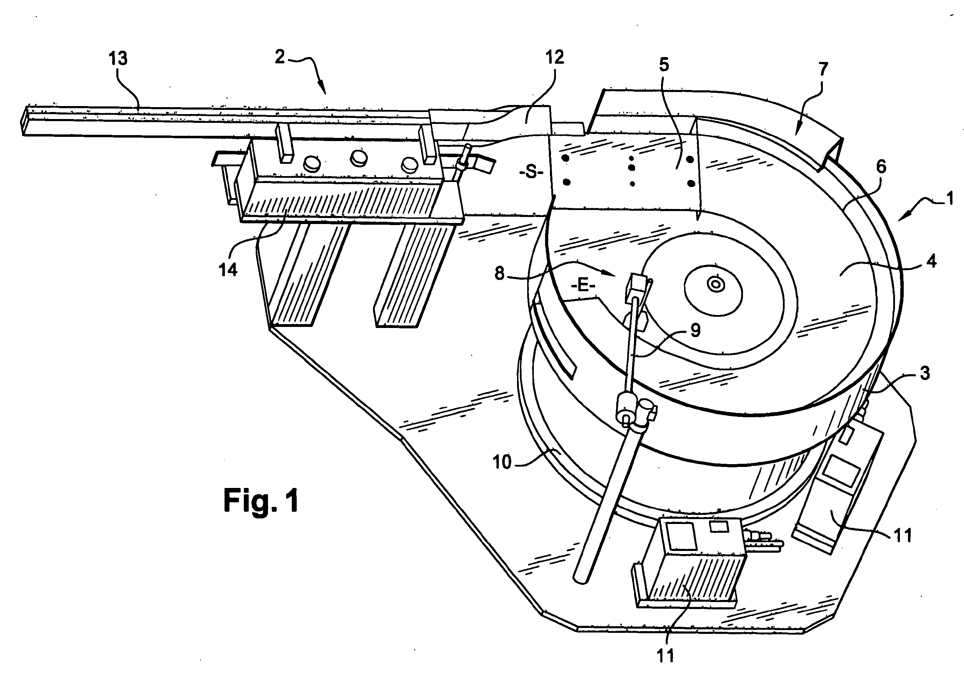

Sur la Figure 1, le système représenté comporte, d'une part, un dispositif de distribution 1 à bol vibrant et, d'autre part, un dispositif tampon 2 disposé en aval de la sortie S du dispositif de distribution 1, le dispositif tampon 2 comportant une partie interchangeable 12 de redressement d'objets et une partie tampon interchangeable 13 de stockage et convoyage puis de présentation des objets.

Le dispositif de distribution 1 est un bol sensiblement circulaire avec un fond 8 bombé et une paroi périphérique 3. A l'intérieur du bol est fixée une rampe 4, 5 conique disposée en périphérie dont la partie la plus élevée et pentue est à la sortie S dudit bol. La rampe 4, 5 comporte sur une partie un moyen de sélection 5 pour éliminer de la rampe les objets n'ayant pas l'orientation déterminée. Ce moyen de sélection est disposé à la sortie S dans le bol vibrant et est une zone rectiligne 5 de la rampe de direction sensiblement parallèle à une tangente à la périphérie 3 du bol. La rampe 4, 5 entre son début/entrée E et sa sortie S s'étend en longueur sur moins de 360°.

Les objets distribués par le dispositif sont des pièces allongées dont le centre de gravité est décentré sur leur longueur avec une tête plus large (que la queue) se poursuivant par une queue moins large/plus fine (que la tête), la tête ayant une forme sensiblement cylindrique et comportant un dessus de tête opposé à un dessous de collerette, la queue se rattachant à la tête par le dessous de collerette. La rampe 4, 5 comporte sur sa longueur un guide 6 qui est ici un épaulement et qui permet de maintenir la tête de l'objet lors de sa progression sur la rampe 4, 5 vers la sortie S, le dessous de collerette s'appuyant sur l'épaulement. La tête d'un objet correctement orienté est donc vers l'extérieur/la périphérie du guide 6 par rapport au centre du bol, la queue de l'objet étant orientée vers le centre du bol en passant sur/au-dessus dudit guide 6.

Dans d'autres variantes, en fonction de la forme de la tête et notamment de la présence ou non d'une (ou plusieurs) encoche circulaire et/ou d'un (ou plusieurs) épaulement circulaire sur le pourtour de la tête, le guide peut être un (ou plusieurs) épaulement et/ou une (ou plusieurs) encoche. Plus généralement, le guide peut être une contre-empreinte du pourtour de la tête. Toutefois, afin de garder une polyvalence d'utilisation (adaptation simple à des objets de divers types/tailles/formes...), on préfère un guide qui est un épaulement et qui supporte les objets par le dessous de collerette de la tête.

Le bol comporte en périphérie une zone élargie 7 au moins au niveau de la section 5 de la rampe comportant le moyen de sélection afin que les objets n'ayant pas l'orientation déterminée et ayant pu basculer vers l'extérieur de la rampe tombent sur le fond 8 du bol et puissent être recyclés dans le dispositif.

Le bol est amené à vibrer par rapport à un socle fixe 10 par des moyens électromécaniques qui ne sont pas détaillés ici. Des moyens électroniques de contrôle 11 permettent de gérer notamment les vibrations et l'introduction des objets en vrac dans le fond 8 du bol, grâce notamment à un capteur 9 détectant la présence ou non d'objets sur ledit fond.

A la sortie S du dispositif 1, on trouve la partie interchangeable 12 de redressement d'objets du dispositif tampon 2. Cette partie de redressement 12 amenant les objets à la verticale depuis une orientation inclinée en sortie S du dispositif 1, est interchangeable pour adaptation à des objets de types différents. A la suite de la partie interchangeable 12 de redressement dans le dispositif tampon 2 on trouve une partie tampon interchangeable 13 de stockage et convoyage puis de présentation des objets. Des moyens électromécaniques 14 sous contrôle électronique permettent notamment le convoyage des objets.

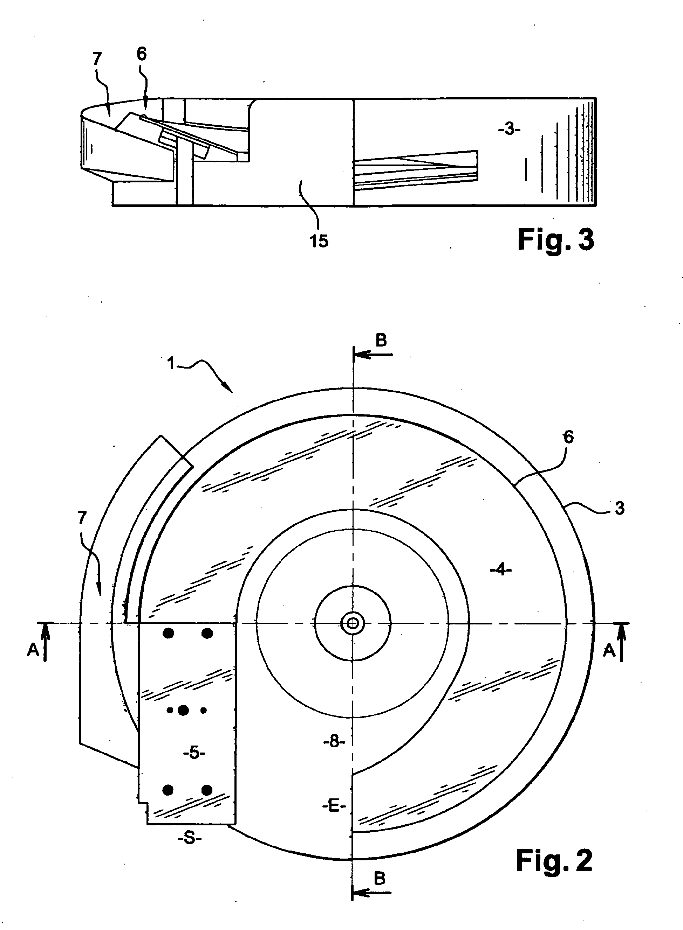

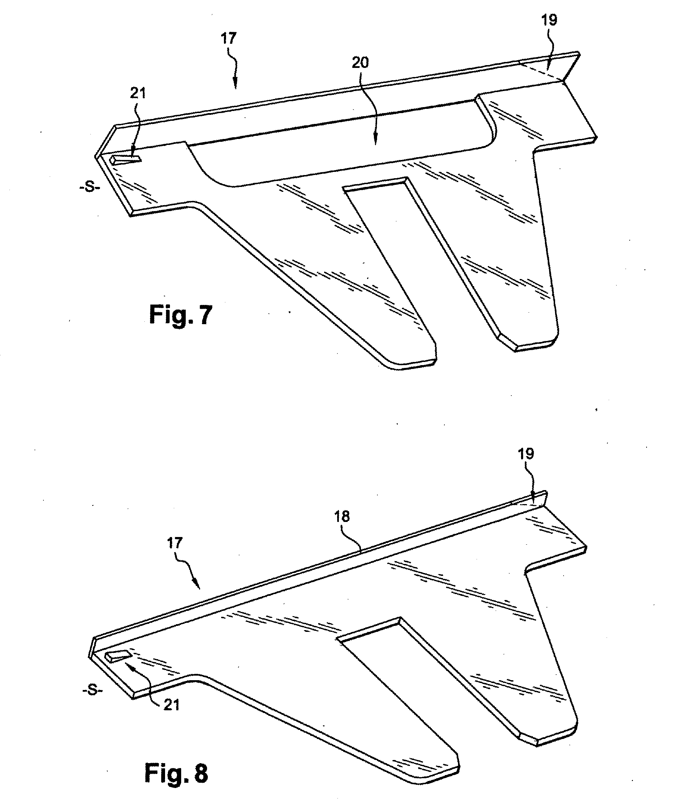

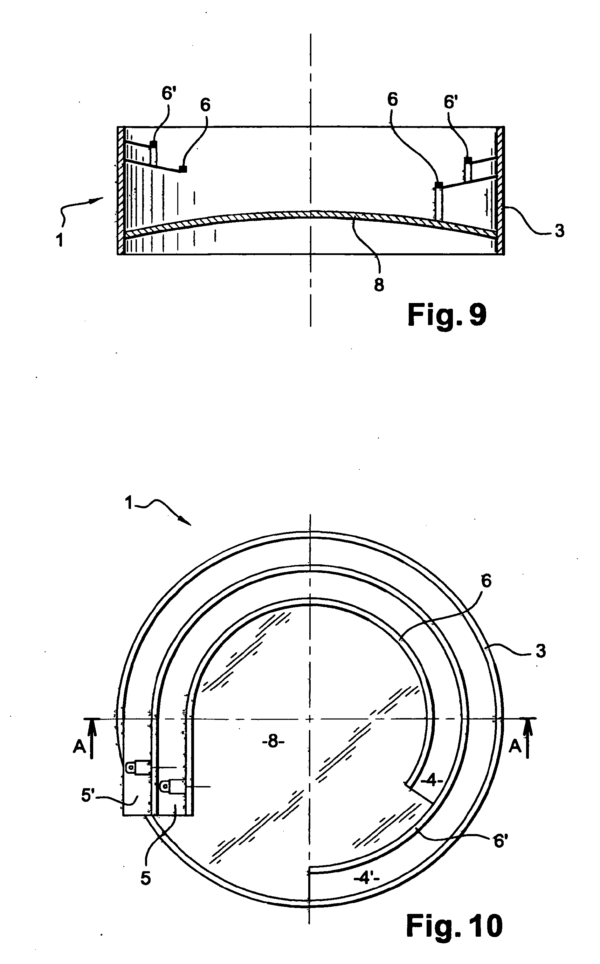

Sur la Figure 2 on peut voir plus précisément la disposition de la rampe 4, 5 conique entre son entrée E et sa sortie S, la pente (vers le centre du bol) étant minimale vers l'entrée E et maximale vers la sortie S. La partie proprement circulaire 4 de la rampe s'étend sur environ 270° et se poursuit par la partie rectiligne 5 du moyen de sélection dont on n'a représenté ici que la première partie qui est fixe et dans le prolongement et plan final de la partie circulaire 4 de la rampe pour ce qui concerne au moins la partie entre le guide 6 et le bas, vers le centre du bol, de la rampe 4. Cette partie fixe rectiligne 5 du moyen de sélection reçoit à sa face inférieure une seconde partie du moyen de sélection (non représentée ici mais que l'on détaillera avec les Figures 7 et 8) qui peut s'y déplacer en translation et y être immobilisé une fois sa position correcte atteinte. On peut noter sur les figures 1 à 8 que la rampe comporte une partie de surface importante s'étendant à partir du guide vers le centre du bol mais, dans des variantes (comme on verra en relation avec les Figures 9 et 10), cette partie peut être d'étendue moindre voire inexistante.

Sur la Figure 3, on peut voir que les objets correctement orientés sont inclinés par rapport à la verticale puisque la sortie, vue de face ici, correspondant au moyen de sélection, est inclinée. Une trappe de vidange 15 est réalisée sur la paroi périphérique 3 du bol avec une articulation par glissière (guillotine) et verrouillage en fermeture par un moyen de verrouillage non représenté ici pour des raisons de simplification.

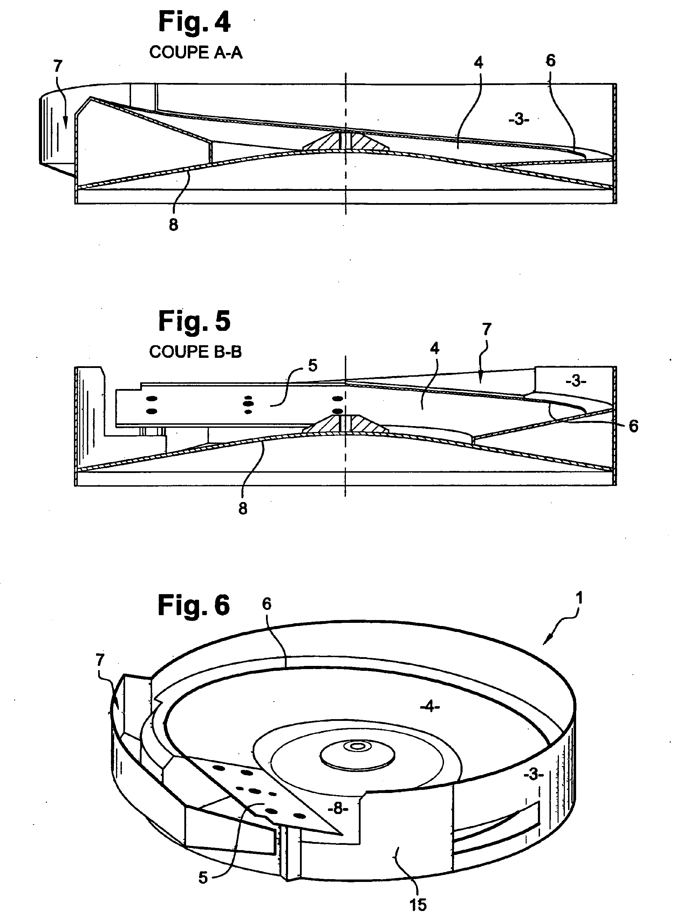

Les Figures 4 et 5 en coupes, permettent de visualiser les inclinaisons des différentes parties du dispositif et notamment le fond 8 bombé et la rampe 4, 5 conique. Afin que les objets ne puissent pas se retrouver bloqués sous la rampe 4, 5, l'espace inférieur qu'elle délimite au moins dans sa partie circulaire 4 est inaccessible et fermé vers le fond. Par contre, comme mieux visible sur la Figure 6, on peut noter que la partie rectiligne 5 formant moyen de sélection est en pont pour permettre le recyclage des objets tombant dans la zone élargie 7, au-delà, vers la périphérie, du moyen de sélection (ou à travers dans le cas d'une seconde partie 17 avec une ouverture 20 comme représenté Figure 7).

Deux exemples de secondes parties 17 du moyen de sélection destinées à venir se positionner sous la première partie du moyen de sélection sont représentés sur les Figures 7 et 8. Un des types comporte un orifice 20 à travers lequel les objets non correctement orientés peuvent tomber. D'une manière générale ces secondes parties ont une forme en L avec la barre 18 du L orientée vers le haut et qui forme vers l'extérieur du moyen de sélection une glissière contre laquelle le dessus de la tête de l'objet ou une encoche circulaire sur le pourtour de la tête (la barre 18 du L orientée vers le haut rentre dans l'encoche de la tête) peut prendre appui et glisser lors du déplacement de l'objet guidé par le guide 6 qui est lui sur la première partie du moyen de sélection. Comme on l'a indiqué, la seconde partie 17 est réglable en translation (mouvement de tiroir) par rapport à la première et la position correcte est telle que pour un objet d'orientation correcte guidé par le guide 6, le dessus (sommet) de la tête vient en appui (lâche, non serré /contraint, ce qui gênerait la progression de l'objet) contre la barre 18 du L orientée vers le haut, tout en empêchant le basculement de la tête vers le bas et notamment à travers l'orifice 20 lorsque celui-ci est présent. On comprend que la forme/taille précise de cette seconde partie 17 et notamment de la barre 18 du L orientée vers le haut sont adaptées au type d'objet dont l'orientation doit être sélectionnée par le moyen de sélection.

La seconde partie 17 peut comprendre à son extrémité amont (coté arrivée des objets, à l'opposé de la sortie S) une rampe 19 d'éjection (représentée en pointillés sur les Figures) permettant de faire basculer et tomber hors de la rampe un objet n'ayant pas l'orientation déterminée et dont une partie chevauche ladite rampe d'éjection lors de sa progression et, suivant le cas (position du centre de gravité par rapport à la rampe d'éjection), l'objet retombera d'un coté ou de l'autre (vers l'extérieur/périphérie de la rampe ou vers le centre du bol) du moyen de sélection.

Enfin, la seconde partie 17 peut comporter à son extrémité aval (coté sortie S) une rampe de redressement 21 de la tête car cette dernière, pour s'appuyer par son dessus de tête, tout en progressant, contre la barre 18 du L orientée vers le haut, ne doit pas être contrainte trop fortement, ce qui l'amène à basculer un peu vers le bas.

L'exemple décrit précédemment met en oeuvre une seule rampe dans le dispositif à bol vibrant mais il est possible de mettre en oeuvre l'invention avec un dispositif comportant plus d'une rampe. Sur les Figures 9 et 10, deux rampes 4, 5 et 4', 5' superposées sont mises en oeuvre avec leurs sorties respectives dans un même plan vertical. Sur la Figure 10 en vue de dessus on note que les rampes sont décalées radialement, les sorties avec moyens de sélection rectilignes 5, 5' étant donc également décalées (les guides sont sur deux tangentes parallèles vers la sortie). De plus, les rampes ont des longueurs de parcours inégales, donc d'étendues angulaires différentes : la supérieure sur environ 270° pour la portion proprement circulaire 4' et l'inférieure sur environ 230° pour la portion proprement circulaire 4. On a représenté sur chacun des moyens de sélection un objet guidé par son guide respectif.

Comme on l'a indiqué précédemment à titre d'alternative de l'exemple des Figures 1 à 8, on peut voir sur la Figure 9 que les guides limitent les rampes vers le centre du bol. On comprend qu'une telle structure de rampe est préférée pour des objets dont le centre de gravité est fortement décalé sur leur longueur comme par exemple des pompes-échantillons qui ont une tigelle (queue) de faible longueur.

Les matériaux mis en oeuvre dans le dispositif sont de préférence métalliques pour pouvoir résister aux contraintes mécaniques des vibrations tout en présentant une certaine rigidité.

On comprend que les exemples donnés sont indicatifs et que l'invention peut être déclinée de diverses manières sans pour autant sortir du cadre général de sa définition. Par exemple dans le cas où plusieurs rampes sont mises en oeuvre les sorties peuvent notamment être décalées angulairement (non plus dans le même plan vertical), chacune des rampes destinée à la sélection d'un objet d'un type particulier, le dispositif pouvant ainsi envoyer sur chaque sortie un type d'objet particulier (les moyens de sélection et, éventuellement le guide seront différents entre les rampes). Enfin, même si le dispositif n'est destiné qu'à un seul type d'objet, le fait de mettre en oeuvre plusieurs rampes le rend plus polyvalent au cas où le type d'objet devrait être changé du fait d'un changement de production, on peut ainsi prévoir une première rampe pour objets à longue queue et une seconde rampe pour objet à queue courte. Le dispositif tampon en sortie d'un bol à plusieurs rampes peut être unique ou multiple (autant de dispositifs tampons que de sorties de bol), dans le premier cas, les objets pouvant sortir du système sur une (réunis) ou plusieurs lignes (séparées ou partiellement réunis).

## Revendications

1. Dispositif de distribution (1) contrôlée d'objets ordonnés par bol vibrant, les objets étant introduits en vrac dans le bol vibrant et sortant selon une orientation déterminée et constante par au moins une sortie (S) latérale du bol vibrant, le bol vibrant sensiblement circulaire ayant intérieurement au moins une rampe (4, 5) périphérique dont la partie la plus élevée est à la sortie du bol vibrant, un moyen mécanique de sélection (5) pour éliminer de la rampe les objets n'ayant pas l'orientation déterminée étant disposé dans une section de la rampe, les objets étant des pièces allongées dont le centre de gravité est décentré dans la longueur avec une tête se poursuivant par une queue, la tête ayant une forme sensiblement cylindrique et comportant un dessus opposé à un dessous de collerette, le dessous de collerette se poursuivant par la queue, la rampe (4, 5) comportant un guide (6) permettant de maintenir la tête de l'objet lors de sa progression sur la rampe (4, 5), le moyen de sélection étant disposé à la sortie, dans le bol vibrant, et étant une zone rectiligne (5) de la rampe
**caractérisé en ce que** la rampe est conique et forme un plan circulaire incliné vers l'intérieur du bol, le guide est un épaulement s'étendant sensiblement circulairement le long de la rampe conique et permettant de maintenir la tête de l'objet lors de sa progression, la queue d'un objet correctement orienté étant orientée vers le centre du bol en passant sur/au dessus dudit guide et le dessous de collerette s'appuyant sur l'épaulement et **en ce que** la zone rectiligne est de direction sensiblement parallèle à une tangente à la périphérie (3) dudit bol vibrant, la rampe (4, 5) s'étendant en longueur sur moins de 360°, et **en ce que** le moyen de sélection (5) comporte une première partie sensiblement plane et fixe, ladite première partie comportant le guide (6), et une seconde partie (17) en L sous la première partie et de position réglable en translation, selon un axe intérieur-extérieur, par rapport à la première partie, la barre (18) du L orientée vers le haut formant vers l'extérieur une glissière contre laquelle le dessus de tête de l'objet ou une encoche circulaire sur le pourtour de la tête de l'objet peut prendre appui et glisser lors du déplacement de l'objet guidé par le guide (6).

2. Dispositif selon la revendication 1, **caractérisé en ce qu'**il comporte des moyens pour que les objets n'ayant pas l'orientation déterminée et qui sont éliminés de la rampe (4, 5) soient recyclés en tombant sur le fond du bol vibrant.

3. Dispositif selon la revendication 2, **caractérisé en ce que** la seconde partie du moyen de sélection comporte une ouverture (20) bordant au moins une partie de la barre (18) du L orientée vers le haut et destinée à permettre le passage et le recyclage par chute d'un objet n'ayant pas l'orientation déterminée.

4. Dispositif selon la revendication 2 ou 3, **caractérisé en ce que** le bol comporte une zone élargie (7) en périphérie au moins au niveau de la section de la rampe comportant le moyen de sélection afin que les objets n'ayant pas l'orientation déterminée et ayant pu basculer vers l'extérieur de la rampe, au-delà de la barre (18) du L orientée vers le haut, tombent sur le fond (8) du bol et puissent être recyclés dans le dispositif.

5. Dispositif selon la revendication 2, 3 ou 4, **caractérisé en ce que** la barre (18) du L orientée vers le haut comporte, à son extrémité opposée à la sortie (S), une première portion avec une rampe (19) d'éjection permettant de faire basculer et tomber hors de la rampe (4, 5) un objet n'ayant pas l'orientation déterminée et dont une partie chevauche ladite rampe (19) d'éjection lors de sa progression.

6. Dispositif selon l'une quelconque des revendications 2 à 5,
**caractérisé en ce que** la barre (18) du L orientée vers le haut et ledit épaulement réalisent une forme générale en U à l'intérieur de laquelle est maintenue et circule la tête.

7. Dispositif selon la revendication 6, **caractérisé en ce que** le fond de la forme générale en U à l'intérieur de laquelle est maintenue et circule la tête dans le moyen de sélection est en retrait par rapport au plan général de la première partie sensiblement plane et fixe du moyen de sélection et qu'une rampe de redressement (21) de la tête est disposée dans ledit fond du U vers la sortie (S).

8. Dispositif selon l'une quelconque des revendications 2 à 7,
**caractérisé en ce que** la première partie sensiblement plane et fixe du moyen de sélection est adaptée pour recevoir d'une manière interchangeable au moins deux types de seconde partie (17) de moyen de sélection, le premier type comportant l'ouverture (20) bordant au moins une partie de la barre du L orientée vers le haut et le second type n'en comportant pas.

9. Dispositif selon l'une quelconque des revendications précédentes, **caractérisé en ce qu'**il comporte au moins deux rampes au moins partiellement superposées, les sorties des rampes débouchant dans un même plan vertical.

10. Système de présentation régulière d'objets par bol vibrant, les objets étant introduits en vrac dans le bol vibrant et sortant orientés à une sortie du système, **caractérisé en ce qu'**il comporte, d'une part, le dispositif de distribution (1) de l'une quelconque des revendications précédentes et, d'autre part, un dispositif tampon (2) disposé en aval de la sortie (S) dudit dispositif de distribution, le dispositif tampon comportant une partie interchangeable (12) de redressement d'objets et une partie tampon interchangeable (13) de stockage et convoyage puis de présentation à la sortie des objets.

## Claims

1. Device (1) for distributing in a controlled manner objects ordered by a vibrating bowl, the objects being introduced in bulk in the vibrating bowl and going out according to a defined and constant orientation through at least one lateral outlet (S) of the vibrating bowl, the substantially circular vibrating bowl having internally at least one peripheral ramp (4, 5), the upper portion of which is located at the outlet of the vibrating bowl, a mechanical selection means (5) for eliminating from the ramp the objects that have not the defined orientation being arranged in a section of the ramp, the objects being elongated pieces whose gravity centre is offset lengthwise, with a head extended by a tail, wherein the head has a substantially cylindrical shape and comprises a top opposed to a flange bottom, the flange bottom being extended by the tail, the ramp (4, 5) comprising a guide (6) for holding the object's head during the advance thereof on the ramp (4, 5), the selection means being arranged at the outlet, in the vibrating bowl, and being a rectilinear area (5) of the ramp,
**characterized in that** the ramp is conical and forms a circular plane inclined toward the inside of the bowl, the guide is a shoulder extending substantially circularly along the conical ramp and serving to hold the head of the object during the advance thereof, the tail of a correctly oriented object being oriented toward the centre of the bowl by passing over/above said guide and the flange bottom leaning on the shoulder, and **in that** the direction of the rectilinear area is substantially parallel to a tangent to the periphery (3) of said vibrating bowl, the ramp (4, 5) extending lengthwise over less than 360°, and **in that** the selection means (5) comprises a substantially plane and fixed first portion, said first portion comprising the guide (6), and a second L-shaped portion (17), located under the first portion and the position of which is adjustable in translation, along an inside-outside axis, with respect to the first portion, the upwardly-oriented leg (18) of the L forming toward the outside a rail against which the top of the object's head or a circular notch in the perimeter of the object's head can lean and slide during the moving of the object guided by the guide (6).

2. Device according to claim 1, **characterized in that** it comprises means for recycling the objects that have not the defined orientation and that are eliminated from the ramp (4, 5), by making them drop to the bottom of the vibrating bowl.

3. Device according to claim 2, **characterized in that** the second portion of the selection means comprises an opening (20) lining at least one portion of the upwardly-oriented leg (18) of the L and intended to allow an object that has not the defined orientation to pass and to be recycled by being dropped.

4. Device according to claim 2 or 3, **characterized in that** the bowl comprises an enlarged area (7) at the periphery thereof, at least at the section of the ramp that comprises the selection means, so that the objects that had not the defined orientation and that have been able to tip toward the outside of the ramp, beyond the upwardly-oriented leg (18) of the L, drop to the bottom (8) of the bowl and be recycled into the device.

5. Device according to claim 2, 3 or 4, **characterized in that** the upwardly-oriented leg (18) of the L comprises, at its end opposed to the outlet (S), a first portion having an ejection ramp (19) for allowing an object that has not the defined orientation and a portion of which overlaps said ejection ramp (19) during the advance thereof to be tipped and dropped out of the ramp (4, 5).

6. Device according to any one of claims 2-5, **characterized in that** the upwardly-oriented leg (18) of the L and said shoulder form a generally U-shape inside which the head is held and circulates.

7. Device according to claim 6, **characterized in that** the bottom of the generally U-shape inside which the head is held and circulates in the selection means is set back from the general plane of the substantially plane and fixed first portion of the selection means and **in that** a ramp (21) for straightening the head is arranged in said bottom of the U toward the outlet (S).

8. Device according to any one of claims 2-7, **characterized in that** the substantially plane and fixed first portion of the selection means is adapted to receive, in an interchangeable manner, at least two types of second portion (17) of selection means, the first type comprising the opening (20) lining at least one portion of the upwardly-oriented leg (18) of the L and the second type not comprising such an opening.

9. Device according to any one of the preceding claims, **characterized in that** it comprises at least two ramps at least partially superposed, the ramp outlets opening into a same vertical plane.

10. System for regularly presenting objects by means of a vibrating bowl, the objects being introduced in bulk in the vibrating bowl and going out in an oriented manner through an outlet of the system, **characterized in that** it comprises, on the one hand, the distribution device (1) of any one of the preceding claims and, on the other hand, a buffer device (2) arranged downstream from the outlet (S) of said distribution device, the buffer device comprising an interchangeable part (12) for straightening objects and an interchangeable buffer part (13) for storing and transporting, and then presenting objects at the outlet.

## Patentansprüche

1. Vorrichtung (1) zur gesteuerten Verteilung von geordneten Gegenständen durch einen Schwingförderer, wobei die Gegenstände lose in den Schwingförderer eingebracht werden und diesen in einer bestimmten und konstanten Ausrichtung durch mindestens einen seitlichen Auslass (S) des Schwingförderers verlassen, wobei der im Wesentlichen kreisrunde Schwingförderer im Inneren mindestens eine Umfangsrampe (4, 5) aufweist, deren höchster Bereich sich am Auslass des Schwingförderers befindet, wobei in einem Abschnitt der Rampe eine mechanische Auswähleinrichtung (5) angeordnet ist, welche Gegenstände von der Rampe entfernt, die nicht die bestimmte Ausrichtung aufweisen, wobei es sich bei den Gegenständen um einen Kopf und einen sich an diesen anschließenden Endteil aufweisende langgestreckte Teile handelt, deren Schwerpunkt in ihrer Längserstreckung außermittig ist, wobei der Kopf im Wesentlichen zylindrisch ist und eine Oberseite aufweist, welche einer Kragen-Unterseite gegenüberliegt, wobei der Endteil sich an die Kragen-Unterseite anschließt, wobei die Rampe (4, 5) eine Führung (6) aufweist, welche es ermöglicht, den Kopf des Gegenstandes während dessen Bewegung auf der Rampe (4, 5) aufrecht zu halten, wobei die Auswähleinrichtung in dem Schwingförderer an dem Auslass angeordnet ist und durch eine gerade Zone (5) der Rampe gebildet ist,
**dadurch gekennzeichnet, dass** die Rampe konisch ist und eine in Richtung des Inneren des Förderers geneigte kreisförmige Ebene bildet, die Führung eine sich im Wesentlichen kreisförmig entlang der konischen Rampe erstreckende Schulter ist, welche das Aufrechthalten des Kopfs des Gegenstands während dessen Bewegung ermöglicht, wobei der Endteil eines korrekt ausgerichteten Gegenstands bei der Bewegung auf die/der Führung in Richtung der Mitte des Förderers geneigt ist und die Kragen-Unterseite sich auf der Schulter abstützt, und dass die gerade Zone im Wesentlichen parallel zu einer Tangente an den Umfang (3) des Schwingförderers gerichtet ist, wobei sich die Rampe (4, 5) in ihrer Länge über weniger als 360° erstreckt, und dass die Auswähleinrichtung (5) ein erstes im Wesentlichen ebenes und feststehendes Teil, welches die Führung (6) aufweist, und ein unter dem ersten Teil befindliches L-förmiges zweites Teil (17) aufweist, dessen Position in Längsrichtung entlang einer von innen nach außen gerichteten Achse in bezug auf das erste Teil einstellbar ist, wobei der nach oben gerichtete Schenkel (18) des L nach außen eine Gleitschiene bildet, an welcher sich die Oberseite des Kopfs des Gegenstands oder eine kreisförmige Nut im Umfang des Kopfs des Gegenstands abstützen und während der Verschiebung des Gegenstands, durch die Führung (6) geführt, entlang gleiten kann.

2. Vorrichtung nach Anspruch 1, **dadurch gekennzeichnet, dass** sie Einrichtungen aufweist, um Gegenstände, welche nicht die bestimmte Ausrichtung aufweisen und von der Rampe (4, 5) entfernt wurden, zurückgeführt werden, indem sie auf den Boden des Schwingförderers fallen.

3. Vorrichtung nach Anspruch 2, **dadurch gekennzeichnet, dass** das zweite Teil der Auswähleinrichtung eine Öffnung (20) aufweist, welche zumindest an einen Teil des aufwärts gerichteten Schenkels (18) des L angrenzt und dazu vorgesehen ist, den Durchtritt und das Zurückführen eines nicht die bestimmte Ausrichtung aufweisenden Gegenstands durch Herabfallen desselben zu ermöglichen.

4. Vorrichtung nach Anspruch 2 oder 3, **dadurch gekennzeichnet, dass** der Förderer eine verbreiterte Umfangszone (7) zumindest in Höhe des die Auswähleinrichtung enthaltenden Rampenabschnitts aufweist, damit die Gegenstände, welche nicht die bestimmte Ausrichtung aufweisen und über den aufwärts gerichteten Schenkel (18) hinaus in Richtung der Außenseite der Rampe gekippt sind, auf den Boden (8) des Förderers fallen und in die Vorrichtung zurückgeführt werden können.

5. Vorrichtung nach Anspruch 2, 3 oder 4, **dadurch gekennzeichnet, dass** der aufwärts gerichtete Schenkel (18) des L an seinem dem Auslass (S) gegenüberliegenden Ende einen ersten Bereich mit einer Auswurframpe (19) aufweist, welche es ermöglicht, einen nicht die bestimmte Ausrichtung aufweisenden Gegenstand, von welchem ein Teil während seiner Bewegung über die Auswurframpe (19) ragt, zu kippen und von der Rampe (4, 5) fallen zu lassen.

6. Vorrichtung nach einem der Ansprüche 2 bis 5, **dadurch gekennzeichnet, dass** der aufwärts gerichtete Schenkel (18) des L und die Schulter im Allgemeinen eine U-Form bilden, in welcher der Kopf gehalten ist und umläuft.

7. Vorrichtung nach Anspruch 6, **dadurch gekennzeichnet, dass** der Boden der allgemeinen U-Form, in welcher der Kopf gehalten ist und in der Auswähleinrichtung umläuft, in bezug auf die allgemeine Ebene des im Wesentlichen ebenen und feststehenden ersten Teils der Auswähleinrichtung zurückgesetzt ist, und dass eine Kopf-Aufrichtrampe (21) in dem Boden des U in Richtung des Auslasses (S) angeordnet ist.

8. Vorrichtung nach einem der Ansprüche 2 bis 7, **dadurch gekennzeichnet, dass** das im Wesentlichen ebene und feststehende erste Teil der Auswähleinrichtung geeignet ist, austauschbar mindestes zwei Typen von zweiten Teilen (17) der Auswähleinrichtung aufzunehmen, wobei der erste Typ die mindestens an einen Teil des aufwärts gerichteten Schenkels des L angrenzende Öffnung (20) aufweist, und der zweite Typ diese nicht aufweist.

9. Vorrichtung nach einem der vorhergehenden Ansprüche, **dadurch gekennzeichnet, dass** sie mindestens zwei mindestens teilweise übereinander angeordnete Rampen aufweist, wobei die Auslässe der Rampen in der gleichen vertikalen Ebene münden.

10. System zur geordneten Bereitstellung von Gegenständen, wobei die Gegenstände lose in den Schwingförderer eingebracht werden und diesen ausgerichtet an einem Auslass des Systems verlassen, **dadurch gekennzeichnet, dass** es einerseits eine Verteilervorrichtung (1) nach einem der vorhergehenden Ansprüche und andererseits eine Puffervorrichtung (2) aufweist, welche stromabwärts des Auslasses (S) der Verteilervorrichtung angeordnet ist, wobei die Puffe.rvorrichtung ein austauschbares Teil (12) zum Aufrichten von Gegenständen und ein austauschbares Pufferteil (13) zum Lagern und Fördern und zum anschließenden Bereitstellen von Gegenständen am Auslass aufweist.
